# EUROPÄISCHE PATENTSCHRIFT

(11) **EP 1 096 186 B1**
(45) Veröffentlichungstag und Bekanntmachung des Hinweises auf die Patenterteilung: **24.11.2004**
(21) Anmeldenummer: 00121927.8
(22) Anmeldetag: 09.10.2000
(51) Int. Cl.: F16J 15/32, F02F 11/00

(54) **Dichtungsanordnung**
Sealing arrangement
Dispositif d'étanchéité

(30) Priorität: 25.10.1999 DE 19951340
(43) Veröffentlichungstag der Anmeldung: 02.05.2001
(73) Patentinhaber: Carl Freudenberg KG, 69469 Weinheim (DE)
(72) Erfinder: Lutaud, Dominique, 52360 Orbigny au Mont (FR)

(56) Entgegenhaltungen:
- EP-A- 0 565 771
- EP-A- 0 727 575
- DE-A- 4 312 424
- DE-A- 4 445 610
- DE-A- 19 745 818
- US-A- 5 470 157

## Beschreibung

Die Erfindung betrifft eine Dichtungsanordnung, umfassend einen Dichtflansch mit zumindest einer ersten Dichtung und einen Trägerflansch mit einem Halter für einen Sensor.

### Stand der Technik

Eine solche Dichtungsanordnung ist aus der DE 43 12 424 C2 bekannt. Die Dichtungsanordnung besteht aus einem Gehäuseverschlußdeckel mit einer Drehzahlgebereinrichtung und einem dynamischen Dichtring, wobei der Dichtflansch und der Trägerflansch einstückig ausgebildet sind und aus Leichtmetall bestehen. Der Halter für den Sensor muß spanabhebend im Trägerflansch angebracht werden. Um auszuschließen, daß die Platzierung des Sensors mit unerwünscht großen, herstellungsbedingten Toleranzen behaftet ist, ist ein erheblicher Herstellungsaufwand erforderlich, was in wirtschaftlicher Hinsicht wenig zufriedenstellend ist. Die Toleranzen der Platzierung des Sensors entstehen aus der Summe der Toleranzen der Einspannungen des Flansches während der spanabhebenden Bearbeitung und den Toleranzen bei der Zuführung des Bearbeitungswerkzeugs. Die Folge sind beispielsweise fehlerhafte Meßwerte über den Drehwinkel einer Welle einer Verbrennungskraftmaschine, die ans Motormanagement geliefert werden.

Nach der spanabhebenden Bearbeitung der vorbekannten Dichtungsanordnung ist die Reinigung zum Entfernen der Späne unumgänglich, was den Herstellungsaufwand weiter vergrößert.

In dem Fällen, in denen der Flansch beispielsweise aus einem Leichmetall besteht, werden komplizierte Spritzgießwerkzeuge benötigt, die sehr teuer und daher nur über sehr große Stückzahlen amortisierbar sind.

DE 197 45 818 A1 offenbart eine Ditchungsanordnung für eine Brennkraftmaschine mit einem Dichtflansch mit einer Dichtlippe und ein Bauteil Zum Einbau an den Motorblock, mit einem Larin angeordneten Fühler.

### Darstellung der Erfindung

Der Erfindung liegt die Aufgabe zugrunde, eine Dichtungsanordnung der eingangs genannten Art derart weiterzuentwickeln, daß diese in fertigungstechnischer und wirtschaftlicher Hinsicht einfach und kostengünstig herstellbar ist, daß das Recycling der Dichtungsanordnung problemlos ist und daß die Positionierung der Sensor-Halterung nur mit vernachlässigbar kleinen Toleranzen behaftet ist.

Zur Lösung dieser Aufgabe ist es vorgesehen, daß der Dichtflansch und der Trägerflansch gemäß Anspruch 1 erzeugt sind. Hierbei ist von Vorteil, daß durch die separate Herstellung von Dichtflansch und Trägerflansch jedes der beiden Teile besonders genau und mit einem vergleichsweise geringen Herstellungsaufwand kostengünstig herstellbar ist. Durch einen bevorzugt übereinstimmenden metallischen Werkstoff für Dichtflansch und Trägerflansch verhalten sich beide Teile auch bezüglich ihrer Wärmedehnung gleich, so daß eine sichere Festlegung der beiden Teile aneinander und gleichbleibend gute Gebrauchseigenschaften während der gesamten Gebrauchsdauer gewährleistet sind. Im Hinblick auf ein möglichst sortenreines Recycling, sind die übereinstimmenden Werkstoffe von Dichtflansch und Trägerflansch von hervorzuhebendem Vorteil. Kraft- und / oder formschlüssige Fügeverfahren sind einfach durchzuführen und zeichnen sich durch eine gute Dauerhaltbarkeit insbesondere dann aus, wenn die miteinander verbundenen Teile aus einem übereinstimmenden Werkstoff bestehen und dadurch ein übereinstimmendes Betriebsverhalten aufweisen.

Gemäß einer vorteilhaften Ausgestaltung kann es vorgesehen sein, daß die erste Dichtung als Radialwellendichtring ausgebildet ist und eine abzudichtende Welle unter einer Vorspannung dichtend umschließt. Der Radialwellendichtring ist dabei bevorzugt unmittelbar an den Dichtflansch anvulkanisiert. Die Geometrie der Dichtlippen der ersten Dichtung ist vom jeweiligen Anwendungsfall abhängig, wobei auch unterschiedliche Materialien für die Dichtlippen zur Anwendung gelangen können.

Der Sensor kann als Drehzahlsensor zur Erfassung der Drehzahl der abzudichtenden Welle ausgebildet sein. Der Sensor kann, falls verlangt, auch den Drehwinkel und / oder die Laufruhe der abzudichtenden Welle erkennen. Derartige Sensoren zur Betriebsdatenerfassung gelangen beispielsweise zur Anwendung, um die Betriebsdaten der Kurbelwelle einer Verbrennungskraftmaschine zu ermitteln. Die Betriebsdaten werden in einem solchen Fall dazu genutzt, über das Motormanagement den Kraftstoff optimal zu dosieren, schädliche Verbrennungsprodukte zu minimieren und eventuelle Motoraussetzer zu erkennen.

Der Dichtflansch kann zusätzlich zur ersten Dichtung eine in axialer Richtung wirksame zweite Dichtung und / oder eine in radialer Richtung wirksame dritte Dichtung aufweisen. Die erste Dichtung kann die Kurbelwelle einer Verbrennungskraftmaschine umschließen, wobei die zweite Dichtung den Motorblock und die dritte Dichtung die Ölwanne der Verbrennungskraftmaschine dichtend anliegend berührt. Durch einen solchen, sogenannten Komplettflansch mit integriertem Sensor, wird die Montage und die Handhabung der Dichtungsanordnung wesentlich vereinfacht. Der Dichtflansch und der Trägerflansch bilden eine vormontierbare Einheit, wobei die vormontierbare Einheit sämtliche am Dichtflansch angeordnete Dichtungen und den am Halter des Trägerflansches angeordneten Sensor umfaßt.

Hinsichtlich einer kostengünstigen Herstellbarkeit können der Dichtflansch und der Trägerflansch jeweils aus einem metallischen Werkstoff bestehen und als Blech ausgebildet sein. Der Dichtflansch und der Trägerflansch können jeweils spanlos umgeformt und dadurch in ihre gebrauchsfertige Form gebracht werden. Der Halter bildet einen einstückigen Bestandteil des Trägerflansches und wird ebenfalls durch spanloses Umformen erzeugt. Metallische Werkstoffe sind für den zuvor beschriebenen Anwendungsfall besonders vorteilhaft, weit sie auch bei hohen Temperaturen ihre Form behalten und auch während einer langen Gebrauchsdauer keine Relaxaktionserscheinungen aufweisen.

Dadurch, daß der Halter einen einstückigen Bestandteil des Trägerflansches bildet, ist die Zuordnung von Halter und Trägerflansch zueinander herstellungsbedingt vorgegeben. Die Gefahr von Montagefehlern und daraus resultierenden, nachteiligen Gebrauchseigenschaften ist dadurch auf ein Minimum begrenzt.

Der Dichtflansch oder der Trägerflansch weisen Ausnehmungen auf, wobei der Trägerflansch oder der Dichtflansch Vorsprünge aufweisen und wobei die Ausnehmungen und die Vorsprünge kongruent ausgebildet und miteinander verbunden sind. Der Dichtflansch und der Trägerflansch können bevorzugt durch die Ausnehmungen und die Vorsprünge miteinander verstemmt sein. Zum Verstemmen der beiden Teile miteinander werden die Vorsprünge in die Ausnehmungen eingefügt und anschließend spanlos derart umgeformt, daß die Vorsprünge gegenüber den Ausnehmungen ein Übermaß und / oder eine abweichende Form aufweisen. Eine Trennung von Dichtflansch und Trägerflansch ist dann ohne Umformung der verstemmten Vorsprünge und / oder Zerstörung der Fügeverbindung nicht mehr möglich.

Durch die insgesamt spanlose Herstellung sind Verunreinigungen der Dichtungsanordnung durch z. B. Metallspäne ausgeschlossen, die zu einer Beschädigung / Zerstörung der Dichtung führen könnten. Störende, anhaftende Leichtmetallspäne, wie dies häufig bei spanabhebend hergestellten Flanschen aus Leichtmetall beanstandet wird, sind nicht möglich.

### Kurzbeschreibung der Zeichnung

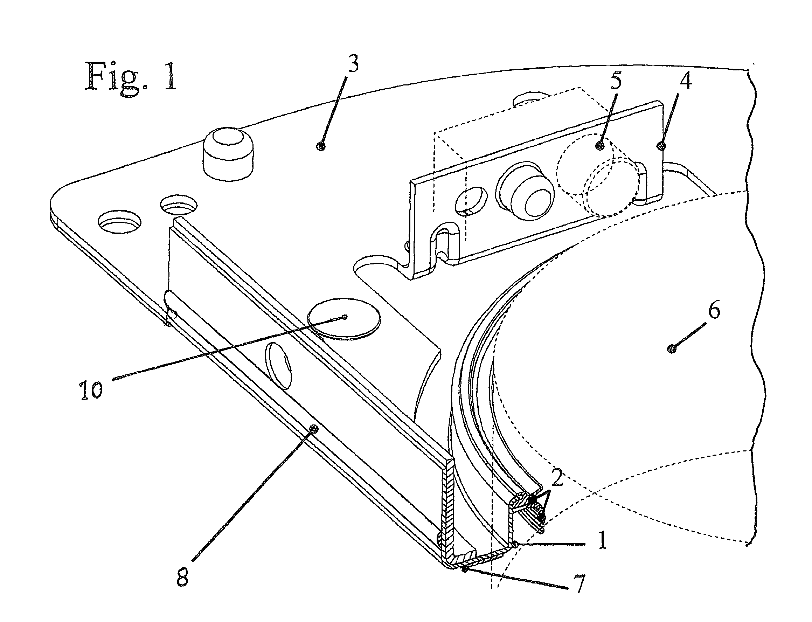

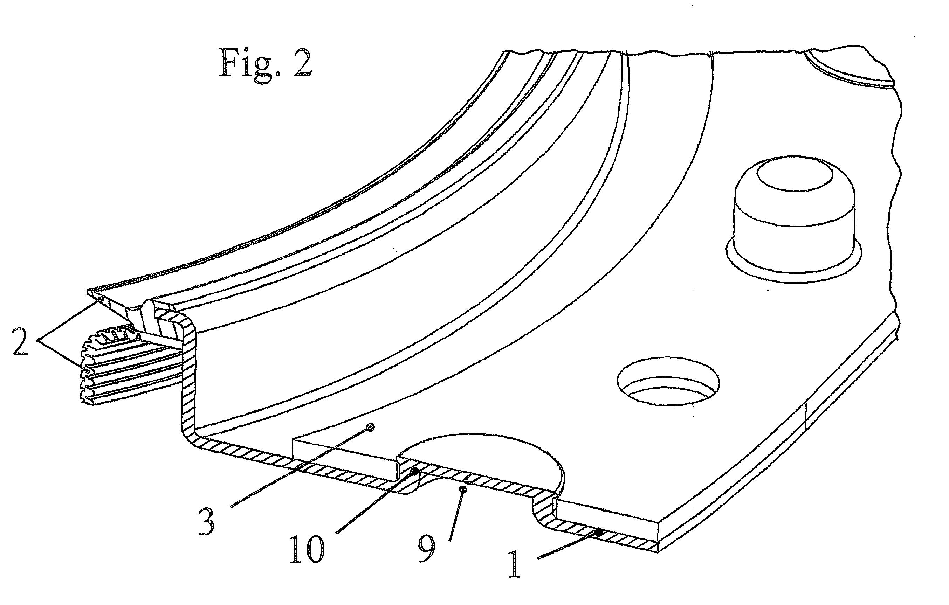

In den Fig. 1 und 2 ist ein Ausschnitt aus einem Ausführungsbeispiel der erfindungsgemäßen Dichtungsanordnung jeweils in dreidimensionaler Darstellung gezeigt.
In Fig. 1 ist der mit dem Dichtflansch verstemmte Trägerflansch gezeigt, der einen einstückig angeformten Halter aufweist.
In Fig. 2 ist ein Ausschnitt aus Fig. 1 gezeigt, wobei der Schnitt in dieser Figur durch eine Fügeverbindung von Dichtflansch und Trägerflansch gelegt ist.

In Fig. 1 ist ein Ausschnitt aus einem Ausführungsbeispiel einer Dichtungsanordnung gezeigt. Die Dichtungsanordnung umfaßt einen Dichtflansch 1 und einen Trägerflansch 3, die beide aus Blech bestehen und formschlüssig miteinander verstemmt sind.

Der Dichtflansch 1 weist in diesem Ausführungsbeispiel drei Dichtungen 2, 7, 8 auf, wobei die erste Dichtung 2 als Radialwellendichtring ausgebildet ist und die abzudichtende Welle 6, die in diesem Ausführungsbeispiel als Kurbelwelle einer Verbrennungskraftmaschine ausgebildet ist, unter einer Vorspannung dichtend umschließt. Die zweite Dichtung 7 ist in axialer Richtung wirksam und legt sich an einen hier nicht dargestellten Motorblock, die dritte Dichtung 8, die in radialer Richtung wirksam ist, an die ebenfalls nicht dargestellte Ölwanne einer Verbrennungskraftmaschine an.

Der Trägerflansch 3 ist mit einem einstückig angeformten Halter 4 versehen, wobei der Halter 4 zur Aufnahme des Sensors 5 eine Durchbrechung aufweist.

In diesem Ausführungsbeispiel weist der Dichtflansch 1 Vorsprünge 10 auf, die in Ausnehmungen 9 des Trägerflansches 3 angeordnet und auf der dem Trägerflansch abgewandten Seite der Ausnehmungen 9 verstemmt sind. Durch die formschlüssige Verbindung wird eine sichere Festlegung und Zentrierung von Dichtflansch und Trägerflansch 3 während einer langen Gebrauchsdauer gewährleistet.

In Fig. 2 ist ein Ausschnitt aus dem Ausführungsbeispiel aus Fig. 1 gezeigt. Der Schnitt verläuft durch die Fügeverbindung zwischen Dichtflansch 1 und Trägerflansch 3. Die Vorsprünge 10 des Dichtflansches 1 durchdringen die Ausnehmungen 9 des Trägerflansches 3. Durch die plastische Verformung der Vorsprünge 10 verkrallen sich diese mit den hinterschnittenen Ausnehmungen und bilden dadurch eine dauerhaltbare Verbindung.

## Patentansprüche

1. Dichtungsanordnung für eine Brennkraftmaschine mit Motorblock, Kurbelwelle und Ölwanne, mit einem Dichtflansch (1) mit zumindest einer ersten Dichtung (2) und einem Trägerflansch (3) mit einem Halter (4) für einen Sensor (5), bei der die erste Dichtung (2) am Dichtflansch (1) im montierten Zustand die Kurbelwelle (6) der Brennkraftmaschine umschließt, **dadurch gekennzeichnet, daß** der Dichtflansch (1) mit der Kurbelwellendichtung (2) und der Trägerflansch (3) von gesonderten, aus einem metallischen Werkstoff hergestellten Teilen gebildet werden, welche kraft- und/oder formschlüssig über Ausnehmungen (9) und Vorsprünge (10) durch Verstemmen oder Verkleben miteinander verbunden sind, wobei im montierten Zustand die Vorsprünge (10) die Ausnehmungen (9) durchdringen.

2. Dichtungsanordnung nach Anspruch 1, **dadurch gekennzeichnet, daß** die Kurbelwellendichtung (2) als Radialwellendichtung im montierten Zustand unter Vorspannung die Kurbelwelle (6) dichtend umschließt.

3. Dichtungsanordnung nach Anspruch 1 oder 2, **dadurch gekennzeichnet, daß** der Sensor (5) als Drehzahlsensor und/oder Drehwinkelsensor zur Erfassung der Drehzahl und/oder des Drehwinkels der Kurbelwelle (6) ausgebildet ist.

4. Dichtungsanordnung nach einem der Ansprüche 1 bis 3, **dadurch gekennzeichnet, daß** der Dichtflansch (1) zusätzlich zur ersten Dichtung eine in axialer Richtung wirksame zweite Dichtung (7) für den Motorblock und/oder eine in radialer Richtung wirksame dritte Dichtung (8) für die Ölwanne der Brennkraftmaschine mit im montierten Zustand jeweils anliegender Berührung aufweist.

5. Dichtungsanordnung nach einem der Ansprüche 1 bis 4, **dadurch gekennzeichnet, daß** der Halter (4) einen einstückigen Bestandteil des Trägerflansches (3) bildet.

6. Dichtungsanordnung nach einem der Ansprüche 1 bis 5, **dadurch gekennzeichnet, daß** der Dichtflansch (1) Vorsprünge (10) und der Trägerflansch (3) Ausnehmungen (9) aufweist, welche komplementär zueinander ausgebildet sind.

## Claims

1. A sealing arrangement for an internal combustion engine with engine block, crankshaft and oil sump, having a sealing flange (1) with at least one first seal (2) and having a carrier flange (3) with a holder (4) with a sensor (5), in which sealing arrangement, in the mounted state, the first seal (2) at the sealing flange (1) surrounds the crankshaft (6) of the internal combustion engine, **characterized in that** the sealing flange (1) having the crankshaft seal (2) and the carrier flange (3) are formed by separate parts which are produced from a metallic material and which are connected to one another non-positively and/or positively, via recesses (9) and projections (10), by caulking or adhesive bonding, the projections (10) penetrating the recesses (9) in the mounted state.

2. A sealing arrangement according to claim 1, **characterized in that**, in the mounted state, the crankshaft seal (2) surrounds the crankshaft (6) sealingly under prestress as a radial shaft seal.

3. A sealing arrangement according to claim 1 or 2, **characterized in that** the sensor (5) is designed as a rotational-speed sensor and/or rotary-angle sensor for detecting the rotational speed and/or the rotary angle of the crankshaft (6).

4. A sealing arrangement according to any one of claims 1 to 3, **characterized in that** the sealing flange (1) has, in addition to the first seal, an axially active second seal (7) for the engine block and/or a radially active third seal (8) for the oil sump of the internal combustion engine, in each case with bearing contact in the mounted state.

5. A sealing arrangement according to any one of claims 1 to 4, **characterized in that** the holder (4) forms a one-piece component of the carrier flange (3).

6. A sealing arrangement according to any one of claims 1 to 5, **characterized in that** the sealing flange (1) has projections (10) and the carrier flange (3) has recesses (9), the said projections and recesses being designed complementarily to one another.

## Revendications

1. Dispositif d'étanchéité pour un moteur à combustion interne avec bloc moteur, vilebrequin et carter d'huile, comprenant une bride d'étanchéité (1) avec au moins un premier joint (2) et une bride porteuse (3) avec un support (4) pour un capteur (5), sur lequel le premier joint (2) sur la bride d'étanchéité (1) entoure dans l'état monté le vilebrequin (6) du moteur à combustion interne, **caractérisé en ce que** la bride d'étanchéité (1) avec le joint de vilebrequin (2) et la bride porteuse (3) sont formées par des parties séparées et fabriquées à base d'un matériau métallique, qui sont reliées entre elles par adhérence et/ou complémentarité de forme au moyen d'évidements (9) et de saillies (10) par matage ou collage, les saillies (10) pénétrant les évidements (9) dans l'état monté.

2. Dispositif d'étanchéité selon la revendication 1, **caractérisé en ce que** le joint de vilebrequin (2) en tant que joint pour arbre tournant entoure dans l'état monté sous précontrainte le vilebrequin de façon étanche.

3. Dispositif d'étanchéité selon la revendication 1 ou 2, **caractérisé en ce que** le capteur (5) est conçu comme capteur de régime et/ou capteur d'angle de rotation pour l'enregistrement du régime et/ou de l'angle de rotation du vilebrequin (6).

4. Dispositif d'étanchéité selon l'une quelconque des revendications 1 à 3, **caractérisé en ce que** la bride d'étanchéité (1 ) présente en supplément du premier joint un second joint (7) efficace dans le sens axial pour le bloc moteur et/ou un troisième joint (8) efficace dans le sens radial pour le carter d'huile du moteur à combustion interne avec un contact respectivement adjacent dans l'état monté.

5. Dispositif d'étanchéité selon l'une quelconque des revendications 1 à 4, **caractérisé en ce que** le support (4) forme un composant d'une seule pièce de la bride porteuse (3).

6. Dispositif d'étanchéité selon l'une quelconque des revendications 1 à 5, **caractérisé en ce que** la bride d'étanchéité (1) présente des saillies (10) et la bride porteuse (3) des évidements (9) qui sont réalisés de façon complémentaire entre eux.
